Europäisches Patentamt

European Patent Office

Office européen des brevets

(11) Veröffentlichungsnummer: **0 481 440 A2**

## (12) EUROPÄISCHE PATENTANMELDUNG

(21) Anmeldenummer: **91117617.0**

(22) Anmeldetag: **16.10.91**

(51) Int. Cl.5: **G01N 21/45**, G01N 21/77

(30) Priorität: **19.10.90 DE 4033357**

(43) Veröffentlichungstag der Anmeldung:
**22.04.92 Patentblatt 92/17**

(84) Benannte Vertragsstaaten:
**CH DE FR GB IT LI NL SE**

(71) Anmelder: **IOT
ENTWICKLUNGSGESELLSCHAFT FÜR
INTEGRIERTE OPTIK-TECHNOLOGIE MBH
Bruchsaler Strasse 22
W-6833 Waghäusel-Kirrlach(DE)**

(72) Erfinder: **Gauglitz, Günther Prof. Dr.
Panoramastrasse 54
W-7400 Tübingen-Hagelloch(DE)**
Erfinder: **Fabricius, Norbert Dr.
Kolpingstrasse 3
W-6832 Hockenheim(DE)**
Erfinder: **Ingenhoff, Jan
Ouenstedtstrasse 26-28
W-7400 Tübingen(DE)**

(74) Vertreter: **Fey, Hans-Jürgen
Carl Zeiss, Patentabteilung, Postfach 1380
W-7082 Oberkochen(DE)**

(54) **Sensor zum Stoffnachweis.**

(57) Sensor zum Stoffnachweis (u.a. Kohlenwasserstoffe) bestehend aus einem integriert optischen Interferometer (1) (Mach-Zehnder-Interferometer) mit einem Meßarm (11) und einem Vergleichsarm (12) in einem Wellenleitersubstrat, wobei auf den Wellenleiter im Bereich des Meßarms (11) als Superstrat (111) ein Polymer, z.B. Polysiloxan, aufgebracht ist, welches von dem nachzuweisenden Stoff durchdrungen werden kann.

Quellverhalten, Gasaufnahme, Brechungsindex des Polymers, Dotierung mit Chromophoren oder Fluorophoren, Schichtdicke und -länge können für ein stoffselektives Verhalten angepaßt werden. Auf einem Chip parallel angeordnete Interferometer mit verschiedenen Superstraten und polychrome Messungen in Verbindung mit Verfahren der Mustererkennung sind weitere Selektionsmittel.

Fig. 1

Die Erfindung betrifft einen Sensor zum Stoffnachweis mit optischen Mitteln.

Ein Feuchtesensor nach der DE 38 32 185 A1 nutzt die feuchteabhängige Brechzahländerung einer Grenzschicht bei einem Interferometer. Die feuchteempfindliche Schicht ist zwischen porösen Reflektoren angeordnet.

Aus der US 4 712 865 ist die Verwendung von Polysiloxanen bei fiberoptischen Gassensoren bekannt, Angaben zum Aufbau eines Sensors sind jedoch nicht gemacht.

Integriert optische Mach-Zehnder-Interferometer sind aus Roß, L., Glastechnische Berichte 62 (1989), Nr. 8, S. 285 bekannt.

Aus Dakin, J., Culshaw, B.: Optical fiber sensors; principles and components. Artech House, Boston, London 1987, ist die Verwendung eines Mach-Zehnder-Interferometers ohne Superstrat-Schicht als Wasserstoff-Sensor bekannt.

Es ist die Aufgabe der Erfindung, einen Sensor zum Stoffnachweis anzugeben, der unter Nutzung der integrierten Optik kompakt, robust und wirtschaftlich in vielen Varianten, angepaßt an konkrete Meßaufgaben, hergestellt werden kann, und der eine kurze Ansprechzeit und geringe Hysterese zeigt.

Gelöst wird diese Aufgabe durch einen Sensor zum Stoffnachweis bestehend aus einem integriert optischen Interferometer mit einem Meßarm und einem Vergleichsarm in einem Wellenleitersubstrat, wobei auf den Wellenleiter im Bereich des Meßarms als Superstrat ein Polymer aufgebracht ist, welches von dem nachzuweisenden Stoff durchdrungen werden kann.

Vorteilhafte Weiterbildungen sind Gegenstand der Ansprüche 2 bis 12.

Insbesondere finden sich darin die zur spezifischen Einstellung der nachweisbaren Stoffe variierbaren Parameter: Lichtwellenlänge (Anspruch 6), funktionelle Gruppen des Polymers (Anspruch 10) und Polymerisationsgrad (Anspruch 9) und Einlagerung von Chromophoren oder Fluorophoren (Anspruch 13).

Wesentliche Parameter sind auch die Schichtdicke des Polymers und die Länge des Superstrats auf dem Meßarm.

Der nachzuweisende Stoff bewirkt dabei durch zwei Mechanismen eine Veränderung der Lichtausbreitung im Meßarm. Einmal durch Veränderung des Brechungsindex des Superstrats und zum anderen durch Veränderung der Schichtdicke durch Quellen, letzteres insbesondere bei sehr dünnen Polymerschichten, die von der Lichtwelle bei Totalreflexion noch bis zur Umgebungsluft durchdrungen werden.

Im folgenden wird die Erfindung anhand der Zeichnung näher erläutert.

Figur 1     Zeigt schematisch ein Beispiel eines erfindungsgemäßen Sensors einschließlich Beleuchtungs-, Nachweis- und Auswerteeinrichtung;

Figur 2a     zeigt den zeitlichen relativen Intensitätsverlauf am Detektor beim Ein- und Ausschalten eines Dampfstroms von n-Pentan;

Figur 2b     das gleiche für n-Hexan;

Figur 2c     das gleiche für n-Heptan;

Figur 2d     das gleiche für n-Octan;

Figur 3a     das Figur 2a) entsprechende Bild, jedoch mit unvernetztem Polymer-Vorprodukt, für n-Pentan;

Figur 3b     zeigt das gleiche für n-Hexan;

Figur 3c     zeigt das gleiche für n-Heptan;

Figur 3d     zeigt das gleiche für n-Octan.

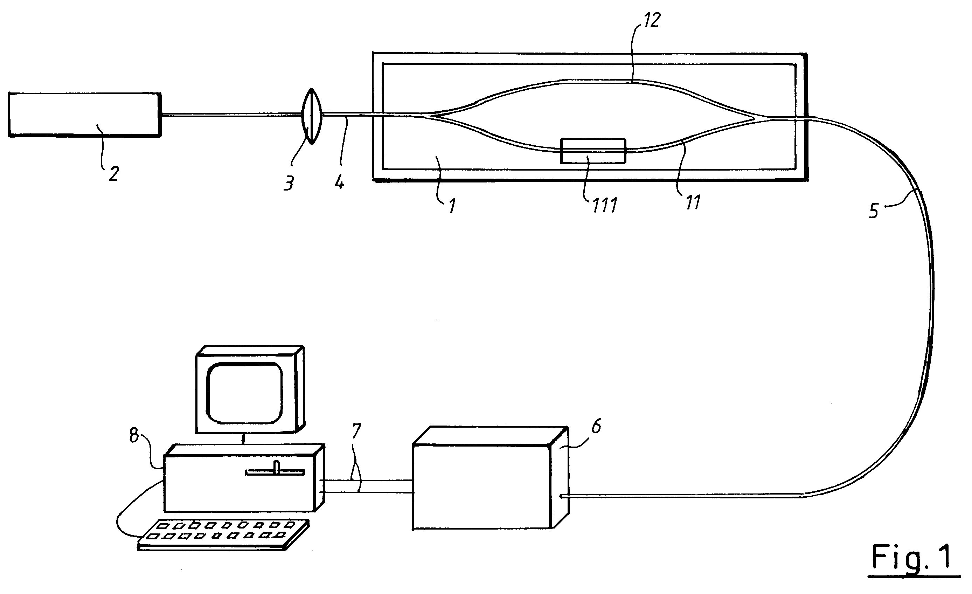

Figur 1 zeigt ein auf einem Glassubstrat realisiertes integriert optisches Mach-Zehnder-Interferometer (1) mit einem Meßarm (11) und einem Vergleichsarm (12). Auf dem Meßarm (11) ist eine Polymerschicht als Superstrat (111) aufgebracht. Diese Polymerschicht kann in beliebiger Weise mit Gasen, Dämpfen oder Flüssigkeiten beaufschlagt werden, deren Stoffgehalt nachgewiesen werden soll.

Durch eine Lichtquelle (2), die ein Laser oder eine Spektrallampe sein kann, ein Objektiv (3) und nach Bedarf eine Lichtleitfaser (4) wird das Interferometer (1) beleuchtet.

Vom Ausgang des Interferometers (1) wird das interferierte Licht über einen zweiten Lichtwellenleiter (5) auf den Detektor (6) geleitet. Eine Signalleitung (7) verbindet diesen mit dem Auswertegerät (8), einem normalen Personalcomputer mit geeigneter Software. Das Auswertegerät (8) dient im wesentlichen zum Aufzeichnen der Meßkurven und gegebenenfalls zum Mustervergleich mit bekannten Meßkurven.

Das Mach-Zehnder-Interferometer (1) ist durch Ionenaustausch unter Verwendung photolithographischer Verfahren in einem Glassubstrat erzeugt. Die Wellenleiter der beiden Interferometer-Arme (11) und (12) haben einen Abstand von etwa 1mm, $5\mu m$ Durchmesser und je nach genauer Zusammensetzung einen Brechungsindex von $n_D = 1,48 - 1,51$.

Für monochromatische Messung dient als Lichtquelle (2) ein 0,5mW He-Ne-Laser (Lambda = 632,8 nm), der über ein Objektiv (3) (f = 5cm) direkt - ohne Lichtleitfaser (4) - in den Interferometer-Baustein (1) eingekoppelt wird. Durch bekannte Präzisions-Justiermittel für Lichtleitfasern wird auf den Ausgang des

Interferometers (1) eine 8μm-Single-Mode-Lichtleitfaser (5) ausgerichtet, die das interferierte Licht zum Detektor (Fotodiode) (6) leitet.

Die Zufuhr von Dampf zum Sensor erfolgt beispielsweise durch ein dicht über dem Meßarm (11) angeordnetes Röhrchen, welchem von einer Pumpe durch die verdampfende Flüssigkeit gesaugte Luft zugeführt wird. Für die gezeigten Meßbeispiele wurde eine solche Anordnung verwendet. Von der Einschaltung der Zufuhr durch die Flüssigkeit bis zum Beginn der Anzeige des Sensors ist ein Zeitverzug von etwa 20s durch die nötige Verdrängung der Luft im Zufuhrweg gegeben, entsprechend auch beim Umschalten auf Frischluftzufuhr.

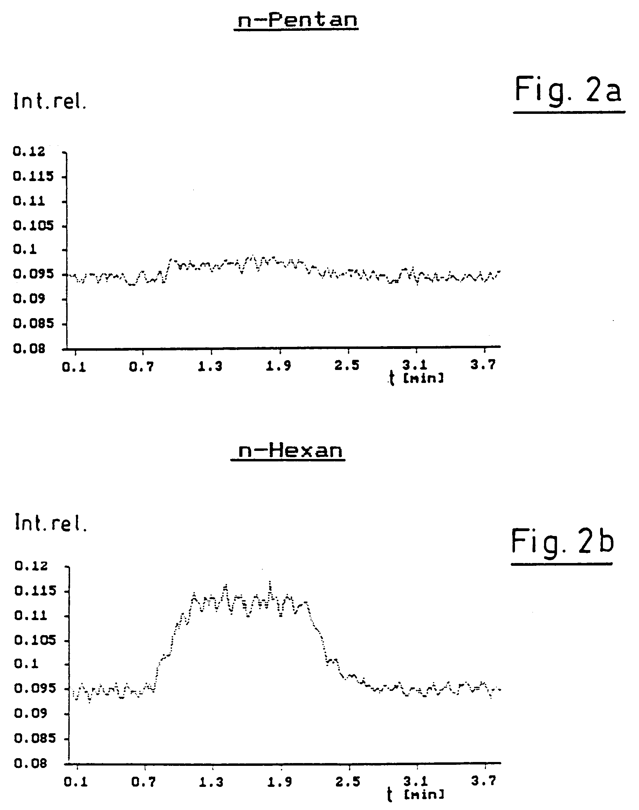

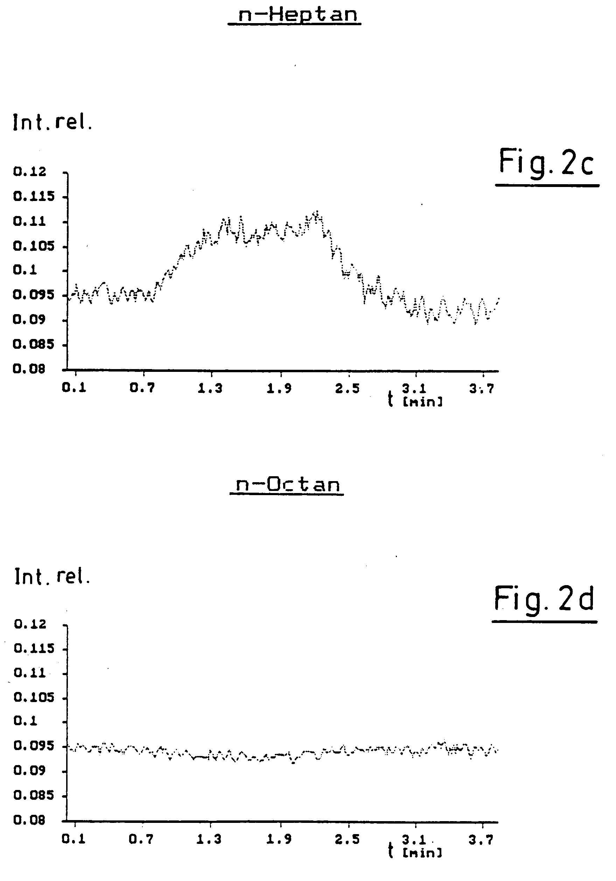

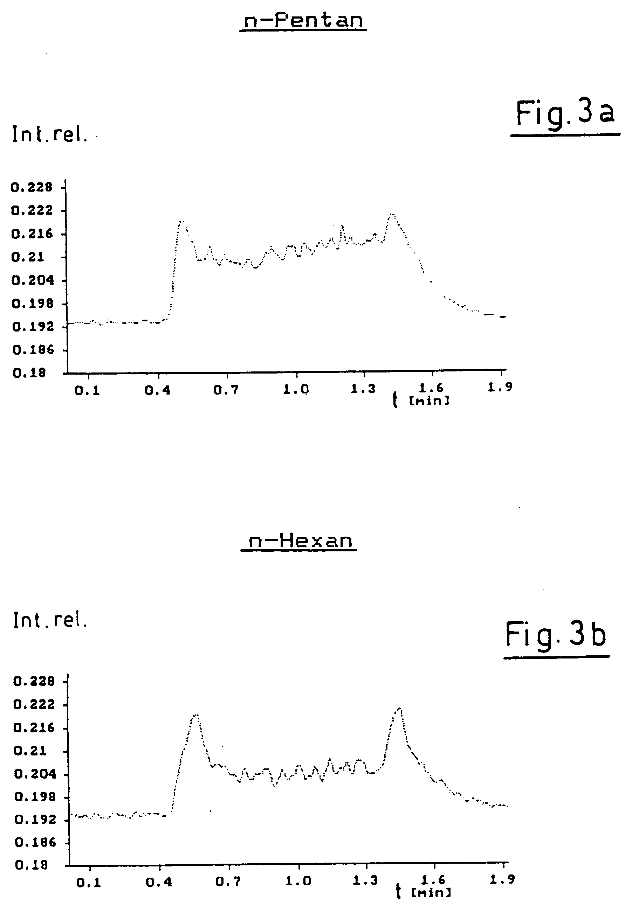

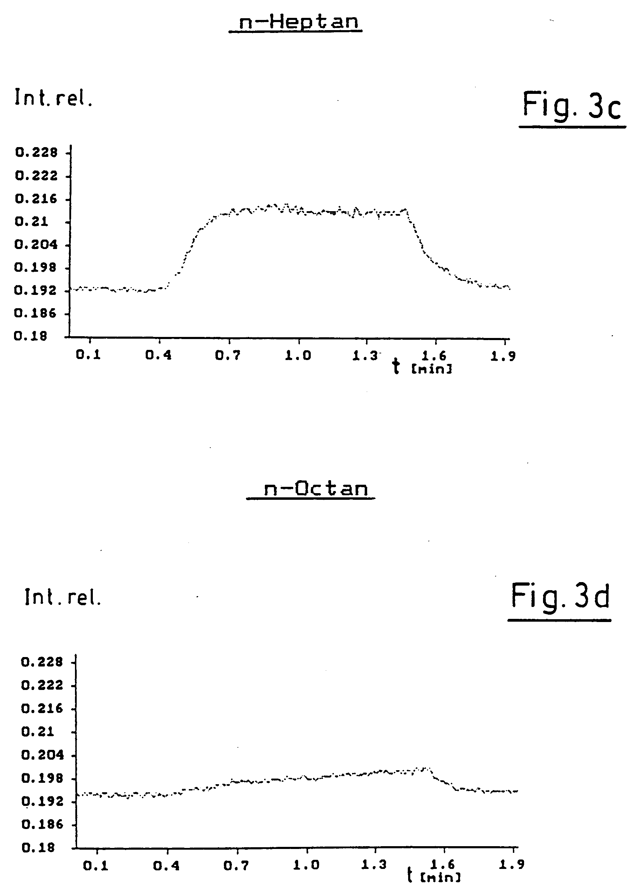

Als Polymer für das Superstrat (111) auf dem Meßarm (11) des Interferometers (1) wurde für die gezeigten Meßbeispiele (Fig. 2, 3) das photopolymerisierbare Polysiloxan VP 1529 von Wacker Chemie verwendet. Nach der Vernetzung hat es einen Brechungsindex von $n_d$ = 1,409, erfüllt also wie auch andere Polysiloxane mit $n_D \approx$ 1,39 - 1,42 die Bedingung für Totalreflexion an der Wellenleitergrenzschicht - der Brechungsindex des Superstrats muß kleiner als der des Wellenleiters sein. Das flüssige Vorprodukt ist gut handhabbar und läßt sich in dünnen Schichten mit guter Haftung auf Glas aufbringen. Das Polysiloxan ist beständig gegen Säuren, Laugen und viele organische Lösungsmittel mit Ausnahmen bei halogenierten Kohlenwasserstoffen.

Die Gasdurchlässigkeit ist etwa 100 mal größer als die von Nylon oder Butylkautschuk.

VP 1529 hat als Endgruppe Acryl, als Seitengruppen Vinyl, Mercaptopropyl und Wasserstoff.

Es zeigt ein starkes Aufquellen bei Zufuhr von Kohlenwasserstoffen, welches in seinem Ausmaß stoffabhängig stark schwankt.

Die Polysiloxanschicht kann unter Verwendung bekannter Techniken der Fotolithographie selektiv auf den Meßarm (11) aufgebracht werden.

Ganz einfach kann aber auch der Meßarm (11) nach unten gehalten und Polysiloxan aufgetropft werden.

Schichtdicken unter 1μm werden auch einfach erhalten, wenn man Polysiloxan auf zum Beispiel Wasser aufspreitet und das Interferometer (1) mit einer schrittmotorbetriebenen Hubeinrichtung mit dem Meßarm (11) eintaucht und den dünnen Polymerfilm dann abhebt.

Tabelle 1 zeigt für die für die Messungen nach Figur 2 und 3 verwendeten n-Alkane und einige Vergleichsstoffe einige hier relevante Stoffeigenschaften, nämlich Brechungsindex $n_D$, Dampfdruck p (bei Normalbedingungen) und relatives Quellverhalten von VP 1529 Polysiloxan bei Beaufschlagung mit diesen Stoffen, bezogen auf n-Heptan.

Tabelle 1

| Kohlenwasserstoff | Brechungsindex nd bei 532 nm | Dampfdruck Torr bei 22°C | Quellvermögen (%) |
|---|---|---|---|
| n-Pentan | 1.35748 | 450 | 15 |
| n-Hexan | 1.37486 | 160 | 33 |
| n-Heptan | 1.38764 | 40 | 100 |
| n-Octan | 1.39743 | 12 | 182 |
| Isooctan | | | 66 |
| m-Xylol | | | 502 |
| VP1529 Polysiloxan | 1.40772 | | |

Von Pentan nach Octan nimmt die Differenz der Brechungsindices zum Polysiloxan ab. Von daher müßte die Modulation des Lichtsignals im Interferometer (1) in dieser Reihenfolge kleiner werden.

Dem mit der Molekülgröße sinkenden Dampfdruck und dem ansteigenden Quellvermögen entspricht aber eine stärkere Einlagerung der größeren Moleküle und damit wieder eine Stärkung des optischen Effekts.

Die Beispiele zeigen auch die große Bandbreite des Quellvermögens für verschiedene Dämpfe, das auch für sehr ähnliche Stoffe, z.B. n-Heptan, n-Octan und Isooctan, sehr verschieden sein kann.

Insgesamt ergibt sich ein sehr differenziertes Bild der stoffabhängigen Beeinflussung der effektiven Lichtgeschwindigkeit im Meßarm (11) des Interferometers (1). Dies ist die Basis für eine stoffspezifische Auslegung.

Fig. 2a bis 2d zeigt Meßbeispiele mit n-Pentan, n-Hexan, n-Heptan und n-Octan, aufgenommen mit einer ausgehärteten VP 1529-Polysiloxanschicht von 1,6μm Dicke und 16,1mm Länge als Superstrat (111) über dem Meßarm (11) des Interferometers (1).

Jeweils nach 0,75 min. wurde die Dampfzufuhr ein-, 1 Minute danach wieder ausgeschaltet.

Während sich bei n-Pentan (Fig. 2a) die Lichtintensität am Detektor (6) kaum merklich vom Rauschen abhebt bei Dampfzufuhr, sind bei n-Hexan (Fig. 2b) und n-Heptan (Fig. 2c) deutliche Interferenzerscheinungen erkennbar. Der Flankenanstieg ist unterschiedlich steil und wohl auf die unterschiedlich schnelle Sättigung des Polysiloxans mit dem Alkan zurückzuführen, bzw. auf die unterschiedlich schnelle Abscheidung nach Schluß der Dampfzufuhr.

Bei n-Octan (Fig. 2d) wird kein signifikantes Signal beobachtet.

Damit zeigt sich, daß der beschriebene Sensor auch für ganz ähnliche Stoffe unterschiedliche Interferenzeffekte zeigt, was für eine stoffspezifische Auslegung nutzbar ist.

Fig. 3a bis 3d zeigt für die selben Stoffe Meßbeispiele, welche mit einer nicht vernetzten VP 1529-Polysiloxanschicht von nur 400nm Dicke und von 13,15 mm Länge aufgenommen sind. Gegenüber Fig. 2a bis 2d zeigt sich ein deutlich abweichendes Bild.

In Figur 3a zeigt n-Pentan jetzt ein starkes Signal, welches zu Beginn und Ende der Dampfzufuhr je ein Maximum zeigt. Dies ist auf ein Überschreiten eines Interferenzmaximums zurückzuführen. Der Einfluß von n-Hexan (Fig. 3b) ist auch hier stärker, daher sinkt das Signal zwischen den Extrema weiter ab. n-Heptan (Fig. 3c) erreicht das Interferenzmaximum nicht. Die Signalflanken sind steiler als im Beispiel Fig. 2c. Bei n-Octan (Fig. 3d) tritt jetzt auch ein zwar schwaches, aber deutlich sichtbares Signal auf.

Ohne Vernetzung ist die Dampfaufnahme des VP 1529 Polysiloxans größer, was den Interferenzeffekt verstärkt. Aber auch die Länge des Superstrats (111) und die Dicke sind gegenüber Fig. 2a bis 2d verändert, so daß sich Einflüsse verschiedener Parameter überlagern.

Bringt man auf einem Substrat zwei Mach-Zehnder-Interferometer (1) unter und belegt jeweils deren Meßarme (11) mit Superstraten (111) nach diesen zwei Beispielen, dann kann man bereits eindeutig aus den Meßergebnissen in Kombination eine Auswahl des Alkans aus der Gruppe n-Pentan bis n-Octan treffen, welches unbekannt dem Sensor zugeführt wird.

Mit größerer Zahl der Interferometer (1) auf einem Substrat (Chip) und mit optimierten Schichtvarianten kann man die Stoffidentifizierung noch wesentlich erweitern. Mit bekannten Verfahren der Mustererkennung ist dies dann automatisierbar. Bei den Meßbeispielen nach Fig. 3a bis 3d ist die Schichtdicke des Superstrats (111) mit 400nm deutlich kleiner als die Laserwellenlänge von 632 nm. Bei der Totalreflexion an der Grenzfläche Wellenleiter / Superstrat tritt also noch ein wesentlicher Teil der Lichtwelle durch die Grenzfläche Superstrat / Luft und Dampf hindurch. Damit beeinflußt auch die Lage dieser Grenzschicht und die Stoffzusammensetzung der Luft / Dampf-Mischung darüber die Lichtausbreitung und Interferenz im Mach-Zehnder-Interferometer (1). Gerade wegen des deutlichen und stoffspezifischen Quellens der Polysiloxane sind daher so dünne Schichten vorteilhaft.

Ein weiterer Parameter, der mit dem dargestellten Sensor zur Stoffidentifikation ausgenutzt werden kann, ist die Dispersion, also die Wellenlängenabhängigkeit des Brechungsindex.

Durch Veränderung der Laserwellenlänge bei sonst gleichem Versuchsaufbau (Figur 1) können viele verschiedene Messungen gewonnen werden und durch Mustererkennungsverfahren können diese mit bekannten Meßergebnissen verglichen und zu einer Stoffidentifikation ausgewertet werden.

Die ganzen Messungen können simultan ausgeführt werden, wenn eine polychromatische Lichtquelle (2) mit stetigem Spektrum oder Linienspektrum und ein Diodenzeilenspektrometer als Detektor (6) verwendet werden. Dabei findet eine Lichtleitfaser (4) zur Einkopplung des Lampenlichts vorteilhaft Verwendung.

Die Verwendung des Sensors ist nicht auf die dargestellten Beispiele der Alkane beschränkt. Insbesondere Kohlenwasserstoffe, auch sauerstoffhaltige und halogenierte, werden von Polysiloxan und anderen Polymeren gut aufgenommen und können dann interferometrisch nachgewiesen werden.

## Patentansprüche

1. Sensor zum Stoffnachweis bestehend aus einem integriert optischen Interferometer (1) mit einem Meßarm (11) und einem Vergleichsarm (12) in einem Wellenleitersubstrat, wobei auf den Wellenleiter im Bereich des Meßarms (11) als Superstrat (111) ein Polymer aufgebracht ist, welches von dem nachzuweisenden Stoff durchdrungen werden kann.

2. Sensor nach Anspruch 1, dadurch gekennzeichnet, daß die Brechzahl des Polymers kleiner ist als die Brechzahl des Wellenleiters.

3. Sensor nach Anspruch 1 und/oder Anspruch 2, dadurch gekennzeichnet, daß das Polymer aufquillt, wenn es von dem Stoff durchdrungen wird.

4. Sensor nach mindestens einem der Ansprüche 1 bis 3, dadurch gekennzeichnet, daß das Polymer ein Polysiloxan ist.

5. Sensor nach mindestens einem der Ansprüche 1 bis 4, dadurch gekennzeichnet, daß das Interferometer (1) ein Mach-Zehnder-Interferometer ist.

6. Sensor nach mindestens einem der Ansprüche 1 bis 5, dadurch gekennzeichnet, daß eine polychrome oder eine durchstimmbare Lichtquelle (2) verwendet wird und die spektrale Abhängigkeit der Einwirkung des Stoffes auf den Meßarm (11) ausgewertet wird.

7. Sensor nach mindestens einem der Ansprüche 1 bis 6, dadurch gekennzeichnet, daß auf einem integriert optischen Chip mehrere Interferometer (1) mit unterschiedlichen Polymer-Superstraten (111) über den Meßarmen (11) vereinigt sind.

8. Sensor nach Anspruch 7, dadurch gekennzeichnet, daß die unterschiedlichen Effekte, die ein Stoff in den Interferometern bewirkt, unter Anwendung von Mustererkennungsverfahren zur Stoffidentifikation genutzt werden.

9. Sensor nach mindestens einem der Ansprüche 1 bis 8, dadurch gekennzeichnet, daß die Stoffempfindlichkeit durch Variation der Polymerisation des Polymer-Superstrats (111) eingestellt wird.

10. Sensor nach mindestens einem der Ansprüche 4 bis 9, dadurch gekennzeichnet, daß das Polysiloxan als funktionelle Gruppen Vinyl und/oder Mercaptopropyl, Acryl, Phenyl, Methyl oder Wasserstoff enthält.

11. Sensor nach mindestens einem der Ansprüche 1 bis 10, gekennzeichnet durch den Nachweis von Alkanen.

12. Sensor nach mindestens einem der Ansprüche 1 bis 10, gekennzeichnet durch den Nachweis von Kohlenwasserstoffen einschließlich sauerstoffhaltiger und halogenierter.

13. Sensor nach mindestens einem der Ansprüche 1 bis 12, gekennzeichnet durch im Polymer-Superstrat (111) eingelagerte Chromophore oder Fluorophore.

Fig. 1

EP 0 481 440 A2

## n-Pentan

Int.rel.

**Fig. 2a**

## n-Hexan

Int.rel.

**Fig. 2b**

## n-Heptan

Int.rel.

Fig.2c

## n-Octan

Int.rel.

Fig.2d

## n-Pentan

**Fig. 3a**

## n-Hexan

**Fig. 3b**

## n-Heptan

Int.rel.

## Fig. 3c

## n-Octan

Int.rel.

## Fig. 3d